# FASCICULE DE BREVET EUROPEEN

(11) **EP 3 683 729 B1**
(45) Date de publication et mention de la délivrance du brevet: **07.09.2022**
(21) Numéro de dépôt: 20152968.2
(22) Date de dépôt: 21.01.2020
(51) Int. Cl.: G06K 19/06, H04N 1/405, B42D 25/23, G07D 7/20

(54) **PROCÉDÉ DE TRAITEMENT D'IMAGE POUR DOCUMENT D'IDENTITÉ**
BILDVERARBEITUNGSVERFAHREN FÜR IDENTITÄTSDOKUMENT
IMAGE-PROCESSING METHOD FOR IDENTITY DOCUMENT

(30) Priorité: 21.01.2019 FR 1900498
(43) Date de publication de la demande: 22.07.2020
(73) Titulaire: SURYS, 77607 Marne-la-Vallée Cedex 3 (FR)
(72) Inventeur: MEINHARDT LLOPIS, Enric, 94235 CACHAN CEDEX (FR); PIC, Marc, 92100 BOULOGNE-BILLANCOURT (FR); OUDDAN, Amine, 94170 LE PERREUX SUR MARNE (FR); THOMAS, Guillaume, 82230 MONCLAR-DE-QUERCY (FR)
(74) Mandataire: Bouvier, Thibault

(56) Documents cités:
- WO-A1-2018/125774
- CN-A- 106 682 717
- FR-A1- 3 058 541
- US-A1- 2003 112 471
- US-A1- 2016 088 181
- US-A1- 2016 110 635

## Description

La présente invention concerne le domaine de la sécurité de documents d'identité, c'est-à-dire comprenant une illustration du portrait du porteur du document, et ci-après « documents » par concision.

De tels documents peuvent être des documents officiels (carte d'identité, passeport, permis de conduire, etc.) ou non officiels (carte d'abonnement, carte d'embarquement, etc.).

La falsification de documents d'identité porte principalement sur le remplacement de l'illustration du portrait, en particulier quand l'illustration est une photographie d'identité. Si pendant longtemps ce remplacement pouvait être assez succinct, il s'est complexifié ces dernières années avec l'utilisation d'images « morphées ».

Par image « morphée », on entend l'image résultant d'une transformation morphologique ou *morphing,* entre la photographie originale du porteur légitime du document d'identité et celle d'un fraudeur qui souhaite utiliser ce document d'identité.

Pour un fraudeur, le document d'identité subissant la manipulation est par exemple choisi de sorte à ce que le porteur légitime partage un certain nombre de traits morphologiques avec le fraudeur. Cette ressemblance morphologique entre le porteur légitime et le fraudeur facilite le travail du faussaire qui imprime ce morphing sur le document d'identité (en conservant les autres éléments de sécurité intacts), ce qui permet de tromper un contrôle visuel et parfois même automatique, tout en restant visuellement compatible avec les autres éléments de sécurité du document d'identité qui font écho à la photographie, comme par exemple une image fantôme, une image par perçage de trous, etc.

Une solution pour pallier à ce problème a déjà été déposée par la demanderesse dans le document WO2018/087465 qui vise à encoder un ensemble d'informations sous forme de code barres 2D, et vendue sous la marque déposée Photometrix.

La présente invention est une alternative à une telle solution.

La demande de brevet américaine US2003/0112471 A1 décrit un procédé de traitement d'image pour document d'identité qui permet de générer un code barre graphique par un processus demi-ton avec encodage graphique intégré.

La présente solution est basée sur le principe du tramage par diffusion d'erreur, plus connu sous son anglicisme « dithering », qui permet de quantifier la couleur d'une image pour réduire son poids en mémoire. Par exemple, un processus de dithering est utilisé quand une image est convertie au format GIF, qui est limité à 256 couleurs, ou quand une image est imprimée, pour réduire la quantité d'encre nécessaire.

En l'espèce, la présente invention consiste en la réduction d'une image source qui est en niveaux de gris en une image tramée en noir et blanc, par un processus appelé « demi-ton » ou « demi -teinte » ou encore par son anglicisme « half-toning », de sorte à ajouter de l'information robuste et extractible de manière exacte, et dans un mode de réalisation particulier, une information permettant de prouver de manière fiable l'authenticité d'un portrait.

La binarisation par demi-ton est une forme particulière de binarisation. Dans le cas d'une binarisation classique, chaque pixel devient noir ou blanc selon qu'il est plus ou moins lumineux par comparaison à un seuil fixe. Dans une binarisation d'Otsu, le seuil est variable et adapté en fonction de l'histogramme de l'image.

Dans le cas de la binarisation par diffusion d'erreur, l'erreur de quantification qu'on fait en approximant un pixel de cette façon est propagée sur les pixels proches (adjacents) qui n'ont pas encore été traités par l'algorithme, pour préserver localement l'intensité de l'image. Ainsi, la binarisation par diffusion d'erreur est une binarisation pour laquelle le seuil est ajusté à chaque pixel.

### RESUME DE L'INVENTION

Plus précisément, l'invention concerne selon un premier de ses objets, un procédé de traitement d'image pour document d'identité.

Il comprend des étapes consistant à :
- Décomposer une image source en niveaux de gris selon une grille prédéterminée comprenant un ensemble de blocs rectangulaires, chaque bloc correspondant à au moins 4 pixels de l'image source,
- Appliquer un algorithme de tramage par diffusion d'erreur à l'image source décomposée en blocs, puis pour chaque bloc :
   - Déterminer l'intensité lumineuse moyenne du bloc,
   - Sélectionner parmi un ensemble de cellules prédéterminées, une cellule qui présente une intensité lumineuse moyenne sensiblement identique à l'intensité lumineuse du bloc,
      - ledit ensemble de cellules prédéterminées comprenant une pluralité de cellules individuelles,
      - chaque cellule individuelle comprenant un ensemble d'au moins 4 pixels représentant un motif unique enregistré dans une mémoire, et
   - Remplacer le bloc par la cellule sélectionnée.

Il est essentiellement caractérisé en ce qu'il comprend en outre une étape d'encodage d'un message dans l'image source décomposée en blocs ;
l'étape d'encodage comprenant, pour une valeur d'intensité lumineuse moyenne donnée, une étape consistant à:
- établir une correspondance entre la position d'une cellule à l'intérieur d'une super-cellule et une valeur binaire du message à encoder.

Dans un mode de réalisation, on peut prévoir que la table de correspondance comprend une correspondance entre chaque intensité lumineuse moyenne et au moins l'une parmi :
- un unique motif, chaque motif pouvant adopter au moins une position à l'intérieur de sa cellule ;
- une pluralité de motifs individuels, chaque motif individuel ne pouvant adopter qu'une seule position à l'intérieur de sa cellule.

Dans un mode de réalisation, on peut prévoir en outre que l'étape d'encodage d'un message dans l'image source décomposée en blocs est mise en œuvre par un algorithme de stéganographie, l'image source comprenant un portrait, le message étant encodé sur plusieurs blocs.

On peut prévoir que le message comprend en outre au moins l'un parmi :
- un code correcteur d'erreur et
- une signature numérique.

Dans un mode de réalisation, l'étape d'encodage comprend, pour une valeur d'intensité lumineuse moyenne donnée, une étape consistant à:
- établir une correspondance entre la position d'une cellule à l'intérieur d'une super-cellule et une valeur binaire du message à encoder.

Dans un mode de réalisation, l'ensemble de cellules comprend un sous-ensemble de cellules d'au moins 4 pixels ^{∗} 4 pixels, chaque cellule dudit sous-ensemble comprenant un motif respectif unique, chaque motif unique dans sa cellule correspondant à un degré d'intensité lumineuse moyenne respectif, chaque motif d'une cellule pouvant adopter au moins une position à l'intérieur de sa cellule, Le procédé comprenant une étape consistant à établir une correspondance entre la position d'un motif à l'intérieur de sa cellule et une valeur décimale du message à encoder,

L'étape d'encodage comprenant, pour un bloc d'une valeur d'intensité moyenne donnée, une étape consistant à sélectionner le motif correspondant à ladite valeur d'intensité moyenne, et à sélectionner parmi l'ensemble de positions possibles dudit motif dans sa cellule, celle qui correspond à la valeur décimale de la partie du message à encoder sur ce bloc.

Dans un mode de réalisation, l'ensemble de cellules comprend un sous-ensemble de cellules de 2 pixels ^{∗} 2 pixels, chaque cellule dudit sous-ensemble comprenant un motif respectif unique, tel qu'il existe une correspondance unique entre une valeur d'intensité moyenne, un motif et une valeur de 2 bits consécutifs,

L'étape de sélection comprenant, pour une valeur d'intensité moyenne donnée, la sélection du motif correspondant à 2 bits consécutifs du message à encoder.

Dans un mode de réalisation, le message comprend au moins l'un parmi :
- un identifiant ;
- un patronyme ;
- pour au moins un point biométrique de l'image source, un ensemble d'au moins une caractéristique locale, parmi :
   - l'intensité lumineuse,
   - l'intensité d'une ou deux couleurs prédéterminées,
- la densité de haute fréquence au-dessus d'un seuil prédéterminé dans un ensemble de pixels autour des pixels d'un parcours prédéterminé,
- l'orientation des contours des formes représentées sur l'image source et traversées par la courbe d'un parcours prédéterminé en chaque point du parcours,
- la direction du gradient de luminosité en chaque point d'un parcours prédéterminé,
- le gabarit de l'image source, et
- la distance entre ledit point biométrique et un autre point biométrique prédéterminé,
le message comprenant au moins l'une desdites caractéristiques locales.

Selon un autre de ses objets, l'invention concerne un procédé de décodage d'une image tramée selon l'invention.

Dans un mode de réalisation, le procédé de décodage comprend des étapes consistant à:
- numériser l'image tramée si elle est imprimée ou affichée,
- positionner l'image tramée sur une grille,
- décomposer l'image tramée en cellules dont la taille est égale au pas de la grille,
- effectuer un seuillage sur chacune des cellules, et
- remplacer chaque motif de l'image par un bloc d'intensité lumineuse moyenne correspondant, par la table de correspondance.

On peut prévoir en outre des étapes consistant à :
- redresser l'image tramée, et
- filtrer l'image tramée avec un filtre passe-haut.

Dans un mode de réalisation, on prévoit une étape consistant à extraire le message en appliquant à l'image tramée un algorithme inverse de l'algorithme de stéganographie.

Dans un mode de réalisation, on prévoit en outre une étape de reconstruction de l'image source à partir de l'image décodée et une étape consistant à comparer le message calculé sur l'image reconstruite et le message extrait de l'image source.

Dans un mode de réalisation, on prévoit en outre une étape de floutage de l'image tramée, préalablement à l'étape de comparaison.

Selon un autre de ses objets, l'invention concerne un programme d'ordinateur comprenant des instructions de code de programme pour l'exécution des étapes du procédé selon l'invention, lorsque ledit programme est exécuté sur un ordinateur.

D'autres caractéristiques et avantages de la présente invention apparaîtront plus clairement à la lecture de la description suivante donnée à titre d'exemple illustratif et non limitatif et faite en référence aux figures annexées.

### Les dessins annexés illustrent l'invention :

[Fig. 1A] illustre une image source,
   [Fig. 1B] illustre Fig. 1A tramée par l'algorithme de Floyd-Steinberg,
   [Fig. 1C] illustre Fig. 1A tramée par l'algorithme de Floyd-Steinberg avec un taux de sous échantillonnage de 3,
   [Fig. 1D] illustre Fig. 1A tramée par l'algorithme de Floyd-Steinberg avec un taux de sous échantillonnage de 5,
   [Fig. 1E] illustre Fig. 1A tramée par l'algorithme de Floyd-Steinberg avec un taux de sous échantillonnage de 7,
[Fig. 2] illustre une table de correspondance, biunivoque, entre un ensemble de niveaux de gris exprimés en 16èmes et un ensemble de cellules comprenant un motif unique pour le premier mode de réalisation selon l'invention,
[Fig. 3A] illustre une image source,
[Fig. 3B] illustre l'application du premier mode de réalisation selon l'invention à l'image de Fig. 3A,
[Fig. 3C] illustre l'application de la première variante de codage d'un message à l'image tramée de Fig. 3B .
[Fig. 4A] illustre l'image redressée de Fig. 3A tramée selon le premier mode de réalisation selon l'invention,
[Fig. 4B] illustre Fig. 4A passée en absorbance, binarisée par un algorithme d'Otsu et passée en luminance,
[Fig. 4C] illustre Fig. 4B dont le message a été extrait selon l'invention,
[Fig. 5A] illustre une image tramée selon le deuxième mode de réalisation selon l'invention,
[Fig. 5B] illustre l'image de Fig. 5A filtrée par un filtre passe-haut,
[Fig. 5C] illustre l'image de Fig. 5B dont le message a été extrait selon l'invention,
[Fig. 6A] illustre l'image de Fig. 4C reconstruite en niveaux de gris selon l'invention,
[Fig. 6B] illustre l'image de Fig. 6A filtrée par un filtre Retinex,
[Fig. 6C] illustre l'image de Fig. 6B floutée,
[Fig. 7A] illustre une correspondance entre un niveau d'intensité de gris et un ensemble de motifs,
[Fig. 7B] illustre une table de correspondance, basée sur la table de Fig. 7A, pour le deuxième mode de réalisation selon l'invention
[Fig. 8A] illustre quatre positions que peuvent prendre l'un des motifs de Fig. 7B, pour coder un message selon l'invention,
[Fig. 8B] illustre le nombre de bits encodables selon l'invention pour chaque motif de Fig. 2,
[Fig. 8C] illustre en ligne inférieure, la position du centre de masse que chaque motif de Fig. 2 peut adopter dans sa cellule, et le nombre de bits encodables en ligne supérieure selon l'invention,
[Fig. 9] illustre quatre positions que peuvent prendre l'un des motifs de Fig. 7B, pour coder un message au sein de super-cellules selon l'invention,
[Fig. 10] illustre un bloc de N pixels ^{∗} M pixels selon l'invention,
[Fig. 11A] illustre une cellule selon l'invention,
[Fig. 11B] illustre une super-cellule selon l'invention.

### DESCRIPTION DETAILLEE

On prévoit de fournir une image source en niveaux de gris. Si l'image est en couleurs, alors elle est transformée en niveaux de gris.

Par exemple une image source est une photographie d'identité. Dans ce cas, elle respecte de préférence les normes de l'ICAO et présente des dimensions de moins de 45 mm de haut et 35 mm de large.

Le traitement d'image selon la présente invention permet de réduire le poids de celle-ci en mémoire. Il est basé sur le tramage par diffusion d'erreur, qui est un cas particulier de binarisation d'image.

La binarisation permet d'obtenir une image tramée par une transformation qui consiste à transformer le niveau de gris de chaque pixel en une valeur binaire noire ou blanche en fonction de certains critères, ce qui est utile notamment pour afficher ou imprimer l'image.

Par exemple, l'image tramée peut être une image fantôme sur un document officiel.

### Tramage par diffusion d'erreur

Selon la présente invention, on prévoit de mettre en œuvre un algorithme de tramage par diffusion d'erreur. En l'espèce on prévoit un algorithme basé sur l'algorithme de Floyd-Steinberg, qui a l'avantage d'être rapide et simple à mettre en œuvre.

La présente invention n'est pas limitée à ce seul algorithme, on peut prévoir par exemple d'autres algorithmes de tramage par diffusion d'erreur, comme les algorithmes de Jarvis ; Judice & Ninke ; Stucki ; Burkes ; Scolorq ; Sierra Atkinson ; Hilbert-Peano ; Ulichney ; Chang, Alain & Ostromoukhov etc.

Dans le cas de l'algorithme de Floyd-Steinberg, on utilise des coefficients de propagation représentant l'erreur de quantification autour d'un pixel, pour les pixels immédiatement contigus audit pixel, et dont la somme des coefficients est égale à 1.

Pour un pixel donné, les pixels immédiatement contigus audit pixel sont donc compris dans ce cas dans un ensemble de 3^{∗}3 pixels dont ledit pixel donné est au centre.

L'algorithme de tramage par diffusion d'erreur traite les pixels de l'image selon un sens prédéterminé, en l'espèce de gauche à droite et de haut en bas.

### Décomposition de l'image

On prévoit de décomposer une image source, en niveaux de gris, en un ensemble de blocs rectangulaires. La décomposition de l'image source est effectuée par application d'une grille prédéterminée à l'image source. Les valeurs de N et M peuvent être indépendantes de la résolution de l'image source. Chaque bloc comprend un ensemble de N pixels ^{∗} M pixels de l'image source, avec N et M des entiers naturels respectivement supérieur ou égal à 2 et dont la valeur dépend par exemple de la résolution de l'image source.

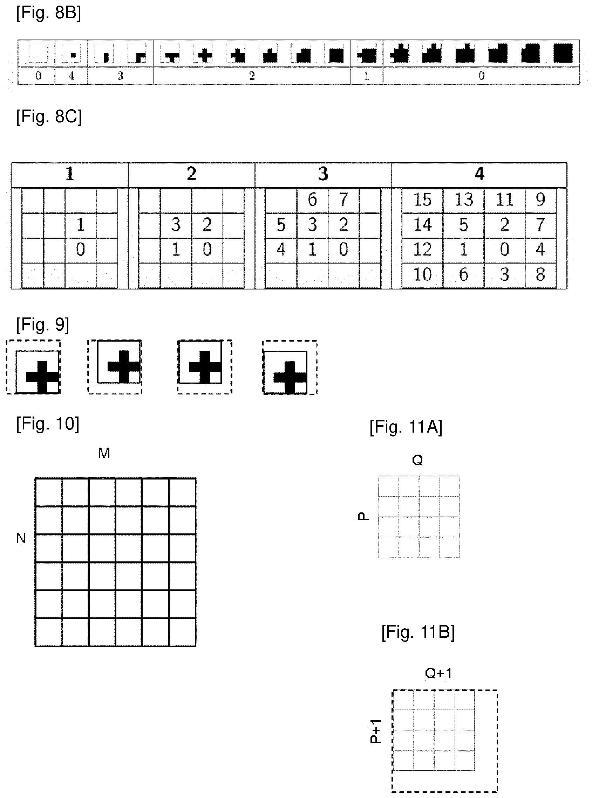

De préférence on prévoit des blocs carrés, soit N = M, comme illustré sur la figure 10 où N=M=6.

Sur l'image source ainsi décomposée en blocs, on prévoit alors d'appliquer un algorithme de tramage par diffusion d'erreur, par exemple l'algorithme de Floyd-Steinberg.

Ensuite, pour chaque bloc, on détermine l'intensité lumineuse moyenne du bloc, c'est-à-dire l'intensité lumineuse moyenne de tous les pixels du bloc, ce qui équivaut à son niveau de gris.

Par ailleurs, il existe une table de correspondance entre un ensemble de niveaux de gris et un ensemble de cellules binaires prédéterminées de P pixels ^{∗} Q pixels (figure 11A dans laquelle P = Q = 4).

Le nombre de niveaux de gris de l'ensemble de niveaux de gris est connu et enregistré dans une mémoire. Il est par exemple compris entre 3 et 256.

Une cellule est dite binaire en ce qu'elle comprend un ensemble de pixels binaires noirs et/ou blancs, représentant un motif unique. De préférence les pixels noirs sont adjacents deux à deux, ce qui limite le risque de mauvaise acquisition de pixels isolés. Avantageusement, le motif des pixels noirs sur fond blanc ne présente ainsi qu'un seul contour.

Les valeurs de P et Q des cellules dépendent notamment du nombre de niveaux de gris. Elles peuvent en outre dépendre de la richesse du message décrit ultérieurement.

Le motif peut être uniforme, c'est-à-dire que la cellule peut être constituée exclusivement de pixels noirs ou exclusivement de pixels blancs. Entre ces deux extrêmes, une cellule peut également comprendre au moins un pixel noir. En l'espèce, on prévoit que le ratio entre le nombre de pixels noirs et les pixels blancs équivaut à un niveau de gris.

La taille des pixels des cellules peut être différente de la taille des pixels de l'image source. Par exemple pour une image source haute définition, la taille des pixels des cellules est de préférence supérieure à la taille des pixels de l'image source.

Le principe est de remplacer chaque bloc dont le niveau de gris est déterminé par une cellule en noir et blanc correspondant au même niveau de gris, selon l'un des modes de réalisation décrit ci-dessous, qui sont combinables entre eux.

Il n'existe pas de relation directe entre résolution de l'image source et la résolution de l'image tramée.

La taille des blocs de l'image source (le nombre de pixels images de l'image source) dépend essentiellement de la résolution de l'image source.

La taille des cellules (le nombre de pixels des cellules) dépend essentiellement du nombre de niveau de gris, c'est-à-dire du degré de détail souhaité sur le niveau de gris des blocs de pixels de l'image source.

### Premier mode de réalisation

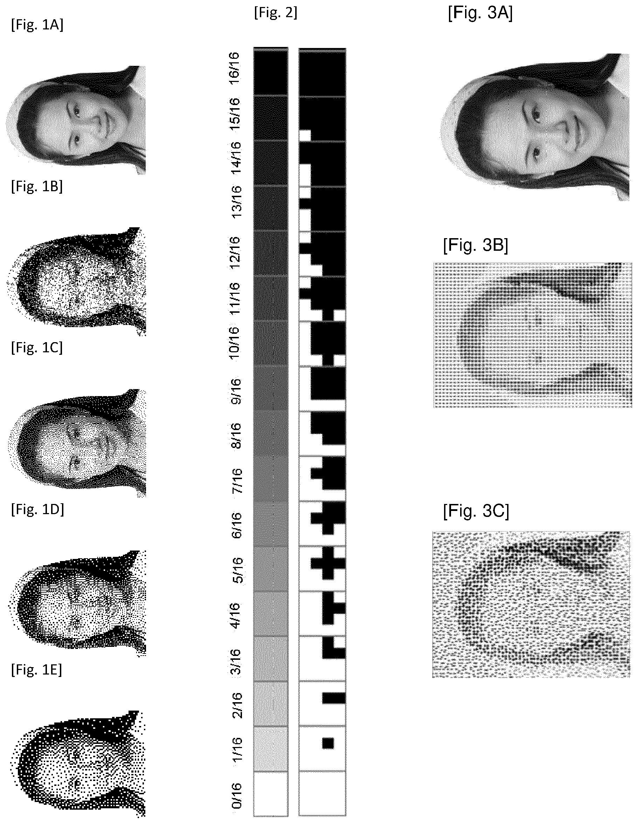

Dans un premier mode de réalisation, la table de correspondance comprend, pour chaque niveau de gris, c'est-à-dire chaque intensité lumineuse moyenne, une cellule binaire individuelle comprenant un motif unique (figure 2).

De préférence, on prévoit que les cellules présentent une forme identique à celles des blocs, en l'espèce carrée.

Par exemple pour un codage de 16 niveaux de gris illustré sur la figure 2, on a un codage sur 4 bits par des cellules où P = Q = 4 ; c'est-à-dire des cellules de 4 pixels ^{∗} 4 pixels, soit 16 pixels au total. Le ratio de pixels noirs sur pixels blancs s'exprime donc en 16^{èmes}, ce qui correspond avantageusement aux coefficients de l'algorithme de Floyd-Steinberg qui s'expriment également en 16^{èmes}.

Pour chaque bloc de l'image décomposée, on peut donc sélectionner parmi l'ensemble de cellules prédéterminées, la cellule unique qui présente une intensité lumineuse moyenne sensiblement identique à l'intensité lumineuse dudit bloc.

On peut alors remplacer le bloc par la cellule sélectionnée. Un niveau de gris est ainsi remplacé par un motif binaire unique. Par exemple, pour un niveau de gris égal à 4/16 (figure 2), on remplace le bloc par la cellule correspondante comprenant un motif de 4 pixels noirs et 12 pixels blancs (en forme de T sur la figure 2).

Dans ce premier mode de réalisation, on a donc une correspondance unique entre un niveau de gris et un motif d'une cellule.

Ce premier mode de réalisation n'est pas limité à un codage de 16 niveaux de gris. On peut prévoir par exemple des cellules carrées de 3 pixels ^{∗} 3 pixels codant 9 niveaux de gris, ou des cellules carrées de 5 pixels ^{∗} 5 pixels codant 25 niveaux de gris, ou encore des cellules rectangulaires.

### Deuxième mode de réalisation

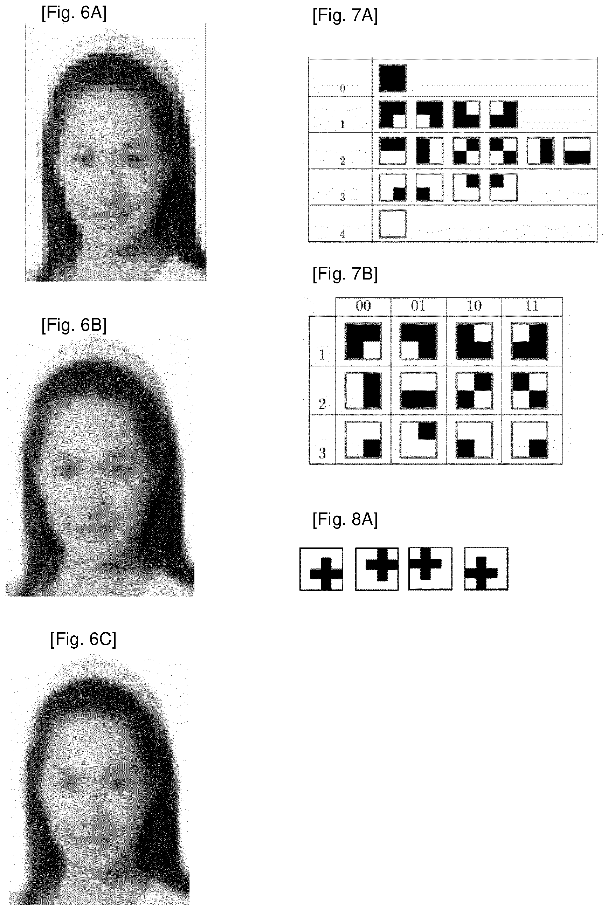

Dans un deuxième mode de réalisation, la table de correspondance comprend, pour chaque niveau de gris, un ensemble d'au moins une cellule binaire individuelle, chaque cellule comprenant un motif unique, comme illustré figure 7A.

Le motif peut être uniforme, c'est-à-dire que la cellule peut être constituée exclusivement de pixels noirs ou exclusivement de pixels blancs. Entre ces 2 extrêmes, la cellule peut également comprendre un seul pixel noir ou une pluralité de pixels noirs.

On prévoit que le ratio entre le nombre de pixels noirs et les pixels blancs équivaut à un niveau de gris.

Par exemple pour un codage de 4 niveaux de gris illustré sur la figure 7A,, on a des blocs carrés de 2 pixels ^{∗} 2 pixels. Dans ce cas, on a donc les 4 niveaux de gris égaux respectivement à 0%, 25%, 50%, 75% ou 100%, ce qui correspond respectivement à des niveaux d'intensité égaux à 4, 3, 2, 1 ou 0 respectivement, comme illustré sur la figure 7A (une cellule blanche n'étant pas considérée comme un niveau de gris).

De préférence, on prévoit que les cellules présentent une forme identique à celle des blocs.

En l'espèce, pour 4 niveaux de gris, on a des cellules carrées de 2 pixels ^{∗} 2 pixels, soit 4 pixels au total, ce qui a un avantage notamment pour le codage décrit ultérieurement.

Pour chaque bloc de l'image décomposée, on peut donc sélectionner parmi l'ensemble de cellules prédéterminées, la cellule unique ou une des cellules (colonne de droite de la figure 7A) qui présente une intensité lumineuse moyenne sensiblement identique à l'intensité lumineuse moyenne (colonne de gauche de la figure 7A) dudit bloc.

On peut alors remplacer le bloc par la cellule sélectionnée. Un niveau de gris est ainsi remplacé par un motif binaire. Par exemple, pour un bloc dont le niveau de gris est égal à 1, on peut remplacer ledit bloc par l'une des cellules correspondantes. En l'espèce sur la figure 7A, on peut remplacer un niveau de gris de 75% par l'une des quatre cellules qui comprennent un motif de 3 pixels noirs et 1 pixel blanc en forme de L.

Ainsi l'image source est décomposée en rectangles dans lesquels le niveau de gris (exprimé en %) de chaque bloc est codé par une cellule correspondante qui comprend un motif unique, ledit motif présentant une intensité lumineuse moyenne sensiblement identique à l'intensité lumineuse dudit bloc. Par exemple l'intensité lumineuse moyenne est exprimée comme le ratio nombre de pixels noirs / nombre de pixels blancs de la cellule.

Dans ce deuxième mode de réalisation, on a donc une correspondance entre un niveau de gris et un ou plusieurs motifs d'une cellule.

### Encodage d'un message

La présente invention permet de fournir une image tramée. En outre, il est possible d'y encoder un message par stéganographie.

Le niveau de gris est déjà codé selon le premier ou le deuxième mode de réalisation.

Il est proposé ici, en plus du niveau de gris, d'encoder un message comme décrit ci après.

De préférence, la position du pixel encodant le début du message est prédéterminée, par exemple le premier pixel en haut à gauche de l'image tramée.

Avec une image tramée selon l'invention, on peut prévoir les deux variantes d'encodage d'un message décrites ci-dessous, qui sont combinables entre elles.

### Première variante d'encodage

Dans une première variante d'encodage, donnée à titre d'exemple mais qui ne fait pas partie de l'invention, on prévoit que la position d'un motif prédéterminé dans sa cellule, en particulier la position de son centre de masse, encode une information binaire ou décimale du message.

Par souci de concision, on ne décrit ici que le cas de 16 niveaux de gris, soit des cellules de 4 pixels ^{∗} 4 pixels.

Par exemple, un niveau de gris dont la valeur est 5/16 est encodé par le motif correspondant en forme de croix, représentant 5 pixels noirs sur un fond blanc (voir figure 2).

La position du centre de masse de ce motif peut adopter 4 positions, comme illustré sur la figure 8A. Ce motif permet donc d'encoder 2 bits.

En généralisant ce principe à tous les motifs de la table de correspondance de la figure 2, on obtient la figure 8B, qui illustre en ligne inférieure le nombre de bits que peut encoder chaque motif de la ligne supérieure, en fonction du nombre de positions que le motif peut adopter dans sa cellule.

Par exemple :
- le motif correspondant à une valeur de niveau de gris 1/16 (figure 2) peut adopter 16 positions, sa position dans la cellule peut donc encoder 4 bits du message (figure 8B) ;
- le motif correspondant à une valeur de niveau de gris 10/16 (figure 2) peut adopter 2 positions, sa position dans la cellule peut donc encoder 1 bit du message (figure 8B) ;
- et de même pour tous les autres motifs.

La figure 8C illustre, en ligne inférieure, la position du centre de masse que chaque motif peut adopter dans sa cellule, pour le nombre de bits encodables en ligne supérieure.

Avantageusement, chaque position du centre de masse dans une cellule est repérée et il existe une correspondance prédéfinie entre cette position et une valeur décimale comprise entre 0 et 15.

Il est ainsi possible de convertir le message binaire en valeurs décimales, en l'espèce comprises entre 0 et 15, et d'encoder le message en valeurs décimales grâce à la table de la figure 8C.

L'application de cette première variante d'encodage est illustrée sur les figures :
- La figure 3A illustre une image source, en l'espèce un portrait destiné à un document d'identité ;
- La figure 3B illustre l'application du premier mode de réalisation à la figure 3A ; et
- La figure 3C illustre l'application de la première variante de codage à l'image tramée de la figure 3B, avec un message de 6469 bits (808 octets).

Ce principe de codage est applicable à d'autres niveaux de gris, c'est-à-dire des cellules autres que 4 pixels ^{∗} 4 pixels.

Cette première variante d'encodage est avantageusement appliquée au premier mode de réalisation décrit précédemment.

### Deuxième variante d'encodage

Dans une deuxième variante d'encodage, selon l'invention, on prévoit que la position d'un motif prédéterminé dans sa cellule est fixe, mais que la position de ladite cellule dans une super-cellule encode une information binaire ou décimale du message.

Une super-cellule, représentée en pointillés sur la figure 9 et sur la figure 11B, présente une forme identique à celle de la cellule ; et pour une cellule de P pixels ^{∗} Q pixels (figure 11A), la super-cellule présente une dimension de P+1 pixels ^{∗} Q+1 pixels (figure 11B).

Plus généralement, pour une cellule de P pixels ^{∗} Q pixels, on prévoit que la super-cellule dans laquelle elle s'inscrit présente une dimension de P+P' pixels ^{∗} Q+Q' pixels avec P' et Q' des entiers naturels, non simultanément égaux à 0. On peut donc avoir des super-cellules rectangulaires, et dont une des dimension (P' ou Q') peut être égale à la dimension (P ou Q respectivement) de la cellule, de sorte à avoir un seul degré de liberté.

De préférence, on a autant de super-cellules que de blocs ; et chaque bloc est remplacé par une super-cellule correspondante.

En l'espèce, avec P=Q=4 c'est-à-dire des cellules de 4 pixels ^{∗} 4 pixels, soit 16 pixels au total, on a des super-cellules de de 5 pixels ^{∗} 5 pixels, soit 25 pixels au total.

Quelles que soient les valeurs de P et de Q, au sein de chaque super-cellule, la cellule peut être déplacée selon deux degrés de liberté et chaque cellule peut adopter l'une des quatre positions illustrées sur la figure 9, qui en l'espèce illustre les positions d'une cellule correspondant à un niveau de gris dont la valeur est 5/16, encodé par le motif correspondant en forme de croix de la figure 2, et dans laquelle la super-cellule de 5 pixels ^{∗} 5 pixels est illustrée en pointillés.

Dans cette variante, le codage du message par la position d'une cellule au sein de sa super-cellule est donc indépendant de la valeur du niveau de gris, contrairement à la première variante.

Quelles que soient les valeurs de P et de Q, chaque cellule ne peut adopter que 4 positions au sein de sa super-cellule. Chaque cellule peut donc coder 2 bits du message, indépendamment du niveau de gris, mais uniquement 2 bits, contrairement à la première variante d'encodage.

### Troisième variante d'encodage

Une troisième variante d'encodage , donnée à titre d'exemple mais ne faisant pas partie de l'invention, est spécifique au deuxième mode de réalisation dans lequel la table de correspondance comprend, pour chaque niveau de gris, un ensemble d'au moins une cellule binaire individuelle, chaque cellule comprenant un motif unique, comme illustré figure 7A.

Dans le deuxième mode de réalisation, on a vu, par exemple pour des blocs des carrés de 2 pixels ^{∗} 2 pixels codant 4 niveaux de gris, que les niveaux de gris 0%, 25%, 50%, 75% ou 100% correspondent respectivement à des niveaux d'intensité égaux à 4, 3, 2, 1 ou 0 respectivement (figure 7A).

Dans ce mode de réalisation, un même niveau de gris peut être codé par un ou plusieurs motifs. Par exemple sur la figure 7A :
- les niveaux 0 et 4 sont codés par une cellule noire et une cellule blanche respectivement ;
- les niveaux 1 et 3 peuvent être codés par 4 motifs chacun, et
- le niveau 2 peut être codé par 6 motifs différents.

Ainsi, avec une seule possibilité d'encodage, les niveaux 0 et 4 ne permettent pas de coder de bits d'information du message.

Pour palier à ce problème, on prévoit avantageusement d'affecter aux cellules d'intensité 0 (figure 7A) un motif d'intensité 1. Ainsi les cellules ou blocs d'intensité trop faible peuvent néanmoins être représentés par 4 motifs différents.

De même, on prévoit avantageusement d'affecter aux cellules d'intensité 4 (figure 7A) un motif d'intensité 3. Ainsi les cellules ou blocs d'intensité trop élevée peuvent néanmoins être représentés par 4 motifs différents.

Enfin, on prévoit avantageusement de restreindre à quatre motifs le nombre de motifs possibles pour encoder le niveau d'intensité 2.

On obtient ainsi la table représentée sur la figure 7B qui illustre 4 motifs uniques par niveau d'intensité 1, 2 ou 3 en ligne, et encodant 2 bits d'information du message 00, 01, 10 et 11 en colonnes.

Pour encoder le niveau d'intensité 2, les motifs codant les bits 00 et 01 ont un centre de masse très excentré. Pour garder plus de cohérence dans l'image traitée, on peut choisir, parmi les deux versions disponibles de chacun de ces motifs (la barre noire horizontale peut être en haut ou en bas ; et la barre noire verticale peut être à gauche ou à droite), la version dont le centre de masse est le plus proche du centre de masse de la cellule originale.

Cette troisième variante d'encodage n'est pas limitée à des blocs de 2 pixels ^{∗} 2 pixels, on peut prévoir des blocs plus grands, c'est-à-dire N>2 et M>2, ce qui permet de coder plus que 4 niveaux de gris.

### Décodage

L'image tramée selon l'un quelconque des modes de réalisation est ensuite produite, généralement par impression (par exemple par laser, jet d'encre, transfert thermique...), gravure (par exemple par laser) ou affichage sur un écran d'affichage.

Par exemple l'image tramée est imprimée sur un document d'identité, par exemple sous forme d'image fantôme, ou sur une carte d'embarquement. De préférence la résolution de l'imprimante est connue et enregistrée dans une mémoire. On peut prévoir une correspondance entre la résolution de l'imprimante et la résolution de l'image tramée encodée.

On peut prévoir de produire également des mires autour de l'image produite, de préférence solidaires de celle-ci, pour faciliter son redressement.

L'image tramée produite est acquise, par exemple par une caméra d'un objet communicant (smartphone, tablette, etc.).

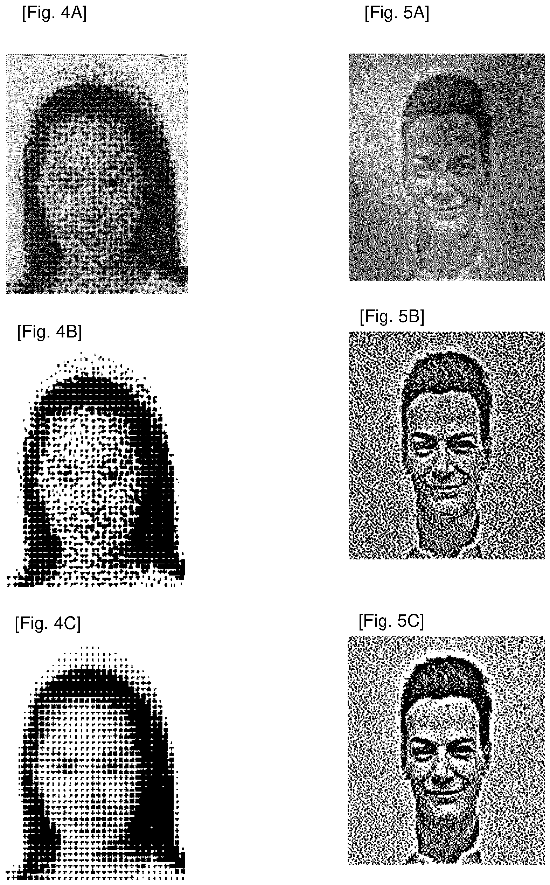

L'image acquise est alors éventuellement redressée. Un exemple d'une image redressée est illustré figure 4A, l'image de la figure 4A étant l'image de la figure 3A tramée selon le premier mode de réalisation, imprimée sur un support puis acquise par un objet communicant et redressée.

On peut prévoir de transformer l'image tramée pour la passer dans le domaine de l'absorbance et on peut prévoir de lui appliquer un algorithme de binarisation, en l'espèce une binarisation d'Otsu, ce qui donne le résultat illustré sur la figure 4B (représentée ici dans le domaine de la luminance pour plus de lisibilité).

Pour décoder le message de l'image tramée, le principe est d'appliquer à l'image tramée l'algorithme inverse de l'algorithme utilisé pour la stéganographie.

A cet effet, l'image binarisée est décomposée en cellules. Le motif de chaque cellule et la position du motif dans sa cellule sont ensuite repérés.

On peut alors déduire la portion de message codée par une cellule, grâce à la table de correspondance.

On peut ainsi extraire et reconstruire le message, comme illustré sur la figure 4C qui représente la figure 4B dont le message a été extrait.

Pour une image tramée selon le deuxième mode de réalisation, dont un exemple est illustré sur la figure 5A, l'image acquise éventuellement redressée est de préférence filtrée par un filtre passe-haut (dont le résultat est illustré sur la figure 5B).

De même que pour le premier mode de réalisation du tramage, pour décoder le message de l'image tramée avec le deuxième mode de réalisation, le principe est d'appliquer à l'image tramée l'algorithme inverse de l'algorithme utilisé pour la stéganographie.

A cet effet, l'image binarisée est décomposée en cellules et le motif de chaque cellule est ensuite repéré.

On peut prévoir de décomposer l'image en cellules de 2 pixels ^{∗} 2 pixels. On peut aussi prévoir de décomposer l'image en cellules de 4 pixels ^{∗} 4 pixels et d'effectuer un seuillage sur chaque cellule en prenant la médiane.

On peut alors déduire la portion de message codée par une cellule donnée, grâce à la table de correspondance de la figure 7B et extraire et reconstruire ainsi le message, comme illustré sur la figure 5C qui représente la figure 5B dont le message a été extrait.

On peut aussi prévoir une étape d'alignement de l'image tramée éventuellement redressée.

### Message

Le message encodé peut être quelconque. Par exemple le message est encodé sur 280 à 450 octets.

De préférence le message comprend au moins une donnée individuelle relative au document d'identité ou au porteur dudit document d'identité.

Par exemple pour un document d'identité, en particulier un passeport, le message peut comprendre un identifiant relatif au document d'identité, par exemple le numéro du document d'identité.

Alternativement ou en combinaison, le message peut comprendre un identifiant relatif au porteur du document d'identité, par exemple son patronyme, sa date de naissance, etc. et par exemple au moins une des informations recommandées par l'ICAO pour les passeports.

Alternativement ou en combinaison, le message peut également comprendre un ensemble d'au moins une valeur numérique, chaque valeur correspondant par exemple à une distance entre deux points biométriques prédéterminés du portrait de l'image source.

Plus généralement, on peut prévoir d'appliquer un algorithme de reconnaissance faciale à l'image source qui comprend un portrait. Tout algorithme de reconnaissance faciale peut convenir, par exemple la bibliothèque DLIB, et permet d'identifier un ensemble de points biométriques du visage.

On peut alors sélectionner un ensemble de points prédéterminés parmi l'ensemble de points biométriques identifiés, et calculer un ensemble d'au moins une caractéristique locale pour au moins un point biométrique sélectionné.

Une caractéristique locale peut être au moins l'une parmi :
- l'intensité lumineuse,
- l'intensité d'une ou deux couleurs prédéterminées,
- la densité de haute fréquence au-dessus d'un seuil prédéterminé dans un ensemble de pixels autour des pixels d'un parcours prédéterminé,
- l'orientation des contours des formes représentées sur l'image et traversées par la courbe d'un parcours prédéterminé en chaque point du parcours,
- la direction du gradient de luminosité en chaque point d'un parcours prédéterminé,
- le gabarit de l'image source, et
- la distance entre le point biométrique sélectionné et un autre point biométrique sélectionné prédéterminé.

Cette caractéristique locale ou ces caractéristiques locales sont avantageusement codées comme tout ou partie du message.

Alternativement ou en combinaison, le message peut également comprendre un hyperlien, un identifiant uniforme de ressource (URI) et en particulier notamment un localisateur uniforme de ressource (URL).

De préférence, le message comprend également un code correcteur d'erreur, encodé avec le message.

Le message peut également comprendre une signature numérique.

### Reconstruction

Quel que soit l'algorithme d'encodage, on peut prévoir une étape de reconstruction de l'image source à partir de l'image décodée.

Connaissant la correspondance entre les cellules et les niveaux de gris, il suffit de remplacer, de préférence une fois le message décodé, chaque cellule par un bloc d'un niveau de gris correspondant.

On peut alors produire, c'est-à-dire afficher ou imprimer, l'image reconstruite en résultant. On peut prévoir une étape de lissage ou floutage de l'image avant sa production.

On peut alors appliquer à l'image finale reconstruite le même algorithme de reconnaissance faciale que celui appliqué à l'image source et calculer un ensemble d'au moins une distance entre deux points biométriques sélectionnés, de manière identique à l'image source, pour obtenir un message calculé sur l'image reconstruite.

On peut alors comparer le message calculé sur l'image reconstruite et le message extrait de l'image source et émettre un signal d'alarme si les deux messages diffèrent d'un nombre de bits supérieur à une valeur seuil prédéterminée.

La présente invention n'est pas limitée aux modes de réalisation précédemment décrits.

Par exemple on peut prévoir une étape consistant à sous échantillonner l'image préalablement au tramage. De préférence, le taux de sous échantillonnage est prédéterminé et enregistré dans une mémoire.

On peut prévoir une étape consistant à filtrer l'image par un filtre « multiscale retinex », décrit dans Multiscale Retinex, Image Processing On Line, pp. 71-88, 2014, avant de lui appliquer l'algorithme de tramage et l'encodage du message. Ce filtre permet de recontraster l'image et d'obtenir une image plus claire, qui peut donc coder plus d'information.

Les différents modes de réalisation décrits sont combinables entre eux : un message peut être codé dans une même image selon plusieurs modes de réalisation.

Une image peut également comprendre un premier message encodé selon le premier mode de réalisation et un deuxième message encodé selon le deuxième mode de réalisation.

Grâce à la présente invention, on peut appliquer un algorithme de reconnaissance faciale à une image reconstruite à partir de l'image tramée. En outre, en fonction de l'algorithme de tramage utilisé ou du taux de sous échantillonnage utilisé, on peut éventuellement appliquer un algorithme de reconnaissance faciale à l'image tramée.

Le décodage peut être effectué en moins d'une seconde avec un ordinateur personnel standard.

## Revendications

1. Procédé de traitement d'image pour document d'identité, comprenant des étapes consistant à :
- Décomposer une image source en niveaux de gris selon une grille prédéterminée comprenant un ensemble de blocs rectangulaires de N pixels ^{∗} M pixels, chaque bloc correspondant à au moins 4 pixels de l'image source,
- Appliquer un algorithme de tramage par diffusion d'erreur à l'image source décomposée en blocs,
puis pour chaque bloc :
- Déterminer l'intensité lumineuse moyenne du bloc,
- Sélectionner parmi un ensemble de cellules prédéterminées dans une table de correspondance, une cellule qui présente une intensité lumineuse moyenne correspondante à l'intensité lumineuse moyenne du bloc,
- ledit ensemble de cellules prédéterminées comprenant une pluralité de cellules individuelles,
- chaque cellule individuelle comprenant un motif unique enregistré dans une mémoire, et
- Remplacer le bloc par la cellule sélectionnée, le procédé comprend en outre une étape d'encodage d'un message dans l'image source décomposée en blocs ;
le procédé étant **caractérisé en ce que** l'étape d'encodage comprend pour une valeur d'intensité lumineuse moyenne donnée, une étape consistant à :
- établir une correspondance entre la position d'une cellule à l'intérieur d'une super-cellule et une valeur binaire du message à encoder.

2. Procédé selon la revendication 1, dans lequel la table de correspondance comprend une correspondance entre chaque intensité lumineuse moyenne et au moins l'une parmi :
- un unique motif, chaque motif pouvant adopter au moins une position à l'intérieur de sa cellule ;
- une pluralité de motifs individuels, chaque motif individuel ne pouvant adopter qu'une seule position à l'intérieur de sa cellule.

3. Procédé selon la revendication 2, dans lequel l'étape d'encodage d'un message dans l'image source décomposée en blocs est mise en œuvre par un algorithme de stéganographie, l'image source comprenant un portrait, le message étant encodé sur plusieurs blocs.

4. Procédé selon la revendication 3, dans lequel le message comprend en outre au moins l'un parmi
- un code correcteur d'erreur et
- une signature numérique.

5. Procédé selon l'une quelconque des revendications 3 ou 4, dans lequel le message comprend au moins l'un parmi :
un identifiant ; et
un patronyme.
Et lorsque l'image source comprend un portrait :
- détecter un ensemble de points biométriques du portrait, et
pour au moins un point biométrique de l'image source,
- déterminer un ensemble d'au moins une caractéristique locale, parmi :
- l'intensité lumineuse,
- l'intensité d'une ou deux couleurs prédéterminées,
- la densité de haute fréquence au-dessus d'un seuil prédéterminé dans un ensemble de pixels autour des pixels d'un parcours prédéterminé,
- l'orientation des contours des formes représentées sur l'image source et traversées par la courbe d'un parcours prédéterminé en chaque point du parcours,
- la direction du gradient de luminosité en chaque point d'un parcours prédéterminé,
- le gabarit de l'image source, et
- la distance entre ledit point biométrique et un autre point biométrique prédéterminé ;
le message comprenant au moins l'une desdites caractéristiques locales.

6. Procédé de décodage d'une image tramée selon l'une quelconque des revendications précédentes, comprenant en outre des étapes consistant à :
- numériser l'image tramée si elle est imprimée ou affichée,
- positionner l'image tramée sur une grille,
- décomposer l'image tramée en cellules dont la taille est égale au pas de la grille,
- effectuer un seuillage sur chacune des cellules, et
- remplacer chaque motif de l'image par un bloc d'intensité lumineuse moyenne correspondant, par la table de correspondance.

7. Procédé de décodage d'une image tramée selon l'une quelconque des revendications 3 à 5, comprenant une étape consistant à extraire le message en appliquant à l'image tramée un algorithme inverse de l'algorithme de stéganographie.

8. Procédé selon la revendication 7, comprenant en outre une étape de reconstruction de l'image source à partir de l'image décodée et une étape consistant à comparer le message calculé sur l'image reconstruite et le message extrait de l'image source.

9. Procédé selon l'une quelconque des revendications 6 à 8, comprenant en outre au moins l'une des étapes parmi :
- redresser l'image tramée,
- filtrer l'image tramée avec un filtre passe-haut, et
- flouter l'image tramée préalablement à l'étape de comparaison.

10. Programme d'ordinateur comprenant des instructions de code de programme pour l'exécution des étapes du procédé selon l'une quelconque des revendications précédentes, lorsque ledit programme est exécuté sur un ordinateur.

## Patentansprüche

1. Bildverarbeitungsverfahren für ein Ausweisdokument, das Schritte enthält, die darin bestehen:
- ein Ursprungs-Graustufenbild gemäß einem vorbestimmten Gitter zu zerlegen, das eine Einheit von rechtwinkligen Blöcken von N Pixel * M Pixel enthält, wobei jeder Block mindestens 4 Pixeln des Ursprungsbilds entspricht,
- einen Rasteralgorithmus durch Dithering an das in Blöcke zerlegte Ursprungsbild anzuwenden,
dann für jeden Block:
- die mittlere Lichtstärke des Blocks zu bestimmen,
- aus einer Einheit von vorbestimmten Zellen in einer Entsprechungstabelle eine Zelle auszuwählen, die eine mittlere Lichtstärke entsprechend der mittleren Lichtstärke des Blocks aufweist,
- wobei die Einheit von vorbestimmten Zellen eine Vielzahl von einzelnen Zellen enthält,
- wobei jede einzelne Zelle ein in einem Speicher gespeichertes einzigartiges Muster enthält, und
- den Block durch die ausgewählte Zelle zu ersetzen,
das Verfahren enthält außerdem einen Schritt der Codierung einer Nachricht im in Blöcke zerlegten Ursprungsbild;
wobei das Verfahren **dadurch gekennzeichnet ist, dass** der Codierschritt für einen gegebenen mittleren Lichtstärkenwert einen Schritt enthält, der darin besteht:
- eine Entsprechung zwischen der Position einer Zelle im Inneren einer Superzelle und einem Binärwert der zu codierenden Nachricht herzustellen.

2. Verfahren nach Anspruch 1, wobei die Entsprechungstabelle eine Entsprechung enthält zwischen jeder mittleren Lichtstärke und mindestens einem von:
- einem einzigartigen Muster, wobei jedes Muster mindestens eine Position innerhalb seiner Zelle einnehmen kann;
- einer Vielzahl von Einzelmustern, wobei jedes Einzelmuster nur eine einzige Position innerhalb seiner Zelle einnehmen kann.

3. Verfahren nach Anspruch 2, wobei der Schritt des Codierens einer Nachricht im in Blöcke zerlegten Ursprungsbild von einem Steganographiealgorithmus durchgeführt wird, wobei das Ursprungsbild ein Porträt enthält, wobei die Nachricht in mehreren Blöcken codiert wird.

4. Verfahren nach Anspruch 3, wobei die Nachricht außerdem mindestens eines enthält von
- einem Fehlerkorrekturcode und
- einer digitalen Signatur.

5. Verfahren nach einem der Ansprüche 3 oder 4, wobei die Nachricht mindestens eines enthält von:
- einer Kennung; und
- einem Patronym,
und wenn das Ursprungsbild ein Porträt enthält:
- eine Einheit von biometrischen Punkten des Porträts zu erfassen, und
für mindestens einen biometrischen Punkt des Ursprungsbilds,
- eine Einheit von mindestens einem lokalen Merkmal zu bestimmen unter:
- der Lichtstärke,
- der Intensität einer oder zwei vorbestimmter Farben,
- der Hochfrequenz-Dichte oberhalb einer vorbestimmten Schwelle in einer Einheit von Pixeln um Pixel eines vorbestimmten Verlaufs herum,
- der Ausrichtung der Umrisse der Formen, die im Ursprungsbild dargestellt sind und von der Kurve eines vorbestimmten Verlaufs an jedem Punkt des Verlaufs durchquert werden,
- der Richtung des Helligkeitsgradienten an jedem Punkt eines vorbestimmten Verlaufs,
- der Begrenzungslinie des Ursprungsbilds, und
- dem Abstand zwischen dem biometrischen Punkt und einem anderen vorbestimmten biometrischen Punkt;
wobei die Nachricht mindestens eines der lokalen Merkmale enthält.

6. Verfahren zum Decodieren eines Rasterbilds nach einem der vorhergehenden Ansprüche, das außerdem Schritte enthält, die darin bestehen:
- das Rasterbild zu digitalisieren, wenn es gedruckt oder angezeigt wird,
- das Rasterbild auf einem Gitter zu positionieren,
- das Rasterbild in Zellen zu zerlegen, deren Größe gleich der Teilung des Gitters ist,
- eine Schwellwertbildung an jeder der Zellen auszuführen, und
- jedes Muster des Bilds durch einen entsprechenden Block mittlerer Lichtstärke durch die Entsprechungstabelle zu ersetzen.

7. Verfahren zum Decodieren eines Rasterbilds nach einem der Ansprüche 3 bis 5, das einen Schritt enthält, der darin besteht, die Nachricht zu entnehmen, indem ein inverser Algorithmus des Steganographiealgorithmus an das Rasterbild angewendet wird.

8. Verfahren nach Anspruch 7, das außerdem einen Schritt der Rekonstruktion des Ursprungsbilds ausgehend vom decodierten Bild und einen Schritt enthält, der darin besteht, die berechnete Nachricht auf dem rekonstruierten Bild und die aus dem Ursprungsbild entnommene Nachricht zu vergleichen.

9. Verfahren nach einem der Ansprüche 6 bis 8, das außerdem mindestens einen der folgenden Schritte enthält:
- das Rasterbild gleichzurichten,
- das Rasterbild mit einem Hochpassfilter zu filtern, und
- das Rasterbild vor dem Vergleichsschritt weichzuzeichnen.

10. Computerprogramm, das Programmcodeanweisungen für die Ausführung der Schritte des Verfahrens nach einem der vorhergehenden Ansprüche enthält, wenn das Programm auf einem Computer ausgeführt wird.

## Claims

1. Method for processing an image for an identity document, said method comprising steps consisting in:
- dividing a greyscale source image into a predetermined grid comprising a set of rectangular blocks of N pixels ^{∗} M pixels, each block corresponding to at least 4 pixels of the source image,
- applying an error diffusion dithering algorithm to the source image divided into blocks,
then, for each block:
- determining the average luminous intensity of the block,
- selecting, from a set of predetermined cells in a lookup table, a cell that has an average luminous intensity corresponding to the average luminous intensity of the block,
- said set of predetermined cells comprising a plurality of individual cells,
- each individual cell comprising a unique pattern stored in a memory, and
- replacing the block with the selected cell,
the method further comprising a step of encoding a message in the source image divided into blocks, the method being **characterized in that** the encoding step comprises, for a given average-luminous-intensity value, a step consisting in:
- establishing a correspondence between the position of a cell inside a super-cell and a binary value of the message to be encoded.

2. Method according to Claim 1, wherein the lookup table comprises a correspondence between each average luminous intensity and at least one among:
- a unique pattern, each unique pattern being able to adopt a least one position inside its cell;
- a plurality of individual patterns, each individual pattern being able to adopt only a single position inside its cell.

3. Method according to Claim 2, wherein the step of encoding a message into the source image divided into blocks is carried out using a steganography algorithm, the source image comprising a portrait, the message being encoded into a plurality of blocks.

4. Method according to Claim 3, wherein the message further comprises at least one among:
- an error correction code, and
- a digital signature.

5. Method according to either one of Claims 3 and 4, wherein the message comprises at least one among:
an identifier; and
a surname, and when the source image comprises a portrait:
- a set of biometric points of the portrait are detected, and
for at least one biometric point of the source image,
- a set is determined of at least one local characteristic among:
- luminous intensity,
- the brightness of one or two predetermined colours,
- whether the high-frequency density is above a predetermined threshold in a set of pixels about the pixels on a predetermined path,
- the orientation of the outlines of shapes featuring in the source image and passed through by the curve of a predetermined path at each point on the path,
- the direction of the lightness gradient at each point on a predetermined path,
- the template of the source image, and
- the distance between said biometric point and another predetermined biometric point,
the message comprising at least one of said local characteristics.

6. Method for decoding an image dithered according to any one of the preceding claims, further comprising steps consisting in:
- digitizing the dithered image if it is printed or displayed,
- positioning the dithered image on a grid,
- dividing the dithered image into cells the size of which is equal to the pitch of the grid,
- performing thresholding in each of these cells, and
- replacing each pattern of the image with a corresponding block of average luminous intensity, via the lookup table.

7. Method for decoding an image dithered according to any one of Claims 3 to 5, comprising a step consisting in extracting the message by applying, to the dithered image, an algorithm that is the inverse of the steganography algorithm.

8. Method according to Claim 7, further comprising a step of reconstructing the source image on the basis of the decoded image and a step consisting in comparing the message computed from the reconstructed image and the message extracted from the source image.

9. Method according to any one of Claims 6 to 8, further comprising at least one of the steps among:
- straightening the dithered image,
- filtering the dithered image with a high-pass filter, and
- blurring the dithered image prior to the comparing step.

10. Computer program comprising program-code instructions for executing steps of the method according to any one of the preceding claims, when said program is executed on a computer.
